# FASCICULE DE BREVET EUROPEEN

(11) **EP 2 432 621 B1**
(45) Date de publication et mention de la délivrance du brevet: **02.04.2014**
(21) Numéro de dépôt: 10727768.3
(22) Date de dépôt: 07.05.2010
(51) Int. Cl.: B24C 1/00, B24C 3/06

(54) **INSTALLATION ET PROCEDE DE TRAITEMENT DE SURFACE PAR JETS DE FLUIDE CRYOGENIQUE**
AUSRÜSTUNG UND VERFAHREN ZUR OBERFLÄCHENBEHANDLUNG VON STRAHLEN AUS EINER KRYOGENEN FLÜSSIGKEIT
EQUIPMENT AND METHOD FOR SURFACE TREATMENT BY JETS OF CRYOGENIC FLUID

(30) Priorité: 20.05.2009 FR 0953359
(43) Date de publication de la demande: 28.03.2012
(73) Titulaire: L'Air Liquide Société Anonyme pour l'Etude et l'Exploitation des Procédés Georges Claude, 75007 Paris (FR)
(72) Inventeur: QUINTARD, Jacques, F-95590 Presles (FR); RICHARD, Frédéric, F-95620 Parmain (FR); TRUCHOT, Charles, F-78300 Poissy (FR)
(74) Mandataire: Pittis, Olivier
(86) Numéro de dépôt international: PCT/FR2010/050886
(87) Numéro de publication internationale: WO 2010/133784

(56) Documents cités:
- DE-U1- 20 308 788
- US-A- 4 993 200

## Description

L'invention porte sur une installation et un procédé de décapage, d'écroutage, de traitement de surface de matériaux revêtus ou non, tels les métaux, le béton, le bois, les polymères, les plastiques ou tout autre type de matériau, par jet de fluide cryogénique à très haute pression.

Actuellement, le traitement de surface de matériaux revêtus ou non, en particulier le décapage, l'écroutage ou analogue, de béton, de peinture..., se fait essentiellement par sablage, par projection d'eau à ultra haute pression (UHP), à la ponceuse, au marteau-piqueur, à la bouchardeuse ou encore par voie chimique.

Toutefois, lorsqu'il doit ne pas y avoir d'eau, par exemple en milieu nucléaire, ou de produit chimique, par exemple du fait de contraintes environnementales drastiques, seuls des procédés de travail dits « à sec » peuvent être utilisés.

Cependant, dans certains cas, ces procédés « à sec » sont difficiles à mettre en oeuvre, sont très laborieux ou pénibles à utiliser ou encore génèrent des pollutions supplémentaires, par exemple du fait de l'ajout de grenaille ou de sable à retraiter ensuite.

Une alternative à ces technologies repose sur l'utilisation de jets cryogéniques sous très haute pression comme proposé par les documents US-A-7,310,955 et US-A-7,316,363. Dans ce cas, on utilise un ou des jets d'azote liquide à une pression de 1000 à 4000 bars et à température cryogénique comprise par exemple entre -100 et -200°C, typiquement environ -140 et -160°C qui sont distribués par un outil porte-buse(s) qui est mis en mouvement, typiquement un mouvement de rotation ou d'oscillation.

Or, l'azote gazeux délivré par les buses, s'il est relâché ou libéré dans la pièce où a lieu le traitement de surface, crée des risques d'anoxie pour l'opérateur notamment, s'il s'y accumule et que la pièce est mal ou pas ventilée.

Pour cette raison, une cloche d'aspiration est en général agencée autour de (ou des) l'outil de traitement de surface d'où sort le jet d'azote liquide, ladite cloche étant en général équipée d'une bavette flexible servant à assurer une fonction de barrière mécanique et de contact entre la cloche d'aspiration et la surface à traiter. Cette bavette peut être munie ou formée d'une rangée de poils flexibles, d'une bande élastique (caoutchouc, cuir, élastomère...), d'un ou plusieurs boudins de mousse...

Cette cloche d'aspiration permet de réaliser une étanchéité partielle entre l'outil et la surface à traiter et permet d'aspirer tout ou partie de l'azote délivré par les buses. Ceci est particulièrement utile lorsqu'on souhaite aspirer les déchets produits lors du traitement de surface, directement à la source pour éviter que ceux-ci ne viennent polluer le lieu dans lequel s'effectue l'opération de traitement de surface, par exemple un décapage surfacique, notamment dans le cas de l'écroutage du béton dans les milieux radioactifs.

Le système d'aspiration mis en oeuvre doit être en dépression afin d'éviter le relargage de l'azote dans la pièce/lieu du travail et de pouvoir aspirer efficacement les résidus de surface.

L'azote éjecté par l'outil porte-buses ainsi que les poussières et les déchets, tels des morceaux de béton ou similaire, sont aspirés par la cloche. Pour assurer une efficacité maximale à l'aspiration, la capacité d'aspiration doit être supérieure au débit d'azote au niveau de l'outil. Ainsi, de l'air extérieur car est également aspiré.

Toutefois, l'air ambiant aspiré contient de l'humidité, c'est-à-dire de la vapeur d'eau, qui s'introduit dans le système d'aspiration.

Or, l'humidité aspirée engendre deux problèmes majeurs.

Tout d'abord, l'humidité vient s'adsorber sur la bavette flexible, notamment sur les poils ou analogue, et se transforme alors en glace au contact des basses températures de la cloche. Ceci peut s'avérer très gênant pour les manipulations. En effet, les éléments constitutifs de la bavette, tels des poils, de par leur souplesse, ont normalement à assurer un rôle fondamental de zone de contact entre la cloche d'aspiration et la surface à traiter. Or, si ces éléments prennent en masse et qu'ils deviennent durs, le contact entre la cloche et le substrat devient très mauvais car très peu « étanche ». Il s'ensuit alors une aspiration de mauvaise qualité, c'est-à-dire que des gravats, poussières ou autres déchets vont « polluer » la pièce où a lieu le traitement. Ceci est rédhibitoire, notamment dans les industries où les résidus de surface doivent être impérativement aspirés, telles les industries nucléaires ou chimiques par exemple.

Par ailleurs, l'humidité aspirée est transférée vers les filtres absolus qui équipent usuellement un système d'aspiration de ce type. A ce niveau, cette humidité agglomère la poussière et les autres résidus de surface pour former une pâte qui vient colmater les filtres absolus, ce qui impacte fortement le rendement de l'aspiration et peut rendre inopérante cette dernière. Ceci a pour conséquence des arrêts de production fréquents pour nettoyer les filtres absolus, ce qui nuit à la productivité. Le document DE 20308788U divulgue une installation selon le préambule de la revendication 1.

Le problème à résoudre est dès lors de proposer une installation et un procédé de décapage, d'écroutage, de traitement de surface de matériaux revêtus ou non, tels les métaux, le béton, le bois, les polymères, les plastiques ou tout autre type de matériau, par jet ou jets de fluide cryogénique à très haute pression qui soient améliorés, c'est-à-dire qui ne conduisent pas ou alors nettement moins fréquemment que dans l'art antérieur, à des défauts d'aspiration dus à une mauvaise étanchéité de la cloche d'aspiration et/ou à un colmatage des filtres ou autres dispositifs de purification ou de filtration équipant le système d'aspiration.

La solution de l'invention est une installation de travail mettant en oeuvre au moins un jet de fluide à température cryogénique sous haute pression comprenant :
- une source de fluide à température cryogénique relié fluidiquement à un outil mobile comportant une ou plusieurs buses de distribution de fluide pour distribuer un ou plusieurs jets dudit fluide à température cryogénique sous haute pression, et
- une première enceinte de protection agencée autour de l'outil mobile et raccordée fluidiquement à des moyens d'aspiration, ladite première enceinte de protection comprenant une extrémité inférieure ouverte, située du côté de la ou des buses de distribution de fluide, de manière à former une cloche d'aspiration autour de l'outil.

L'installation de l'invention est caractérisée en ce qu'elle comporte en outre des moyens d'étanchéité gazeuse aptes à et conçus pour former au moins une barrière gazeuse protectrice au moins au niveau de l'extrémité inférieure de la première enceinte de protection et sur au moins une partie de la périphérie de ladite première enceinte de protection, lesdits moyens d'étanchéité gazeuse comprenant au moins :
- une deuxième enceinte protectrice agencée autour d'au moins une partie de la première enceinte de protection et ouverte au niveau de l'extrémité inférieure de la première enceinte de protection, et
- des moyens d'alimentation en gaz sec reliés fluidiquement à ladite deuxième enceinte protectrice pour alimenter l'intérieur de ladite deuxième enceinte protectrice le gaz sec.

Selon le cas, l'installation de l'invention peut comprendre l'une ou plusieurs des caractéristiques suivantes :
- les moyens d'alimentation en gaz sec comprennent une source d'azote sec ou d'air sec.
- elle comporte au moins un échangeur thermique comprenant un dispositif d'échappement, en particulier un évent, agencé entre la source de fluide à température cryogénique et l'outil rotatif, les moyens d'alimentation en gaz sec étant relié fluidiquement audit dispositif d'échappement de manière à pouvoir récupérer au moins une partie du gaz s'échappant par ledit dispositif d'échappement et l'introduire subséquemment dans ladite deuxième enceinte protectrice.
- la source de fluide à température cryogénique est un réservoir contenant un liquide cryogénique surmonté d'un ciel gazeux, les moyens d'alimentation en gaz sec étant relié fluidiquement audit ciel gazeux de la source de fluide à température cryogénique.
- les moyens d'alimentation en gaz sec convoyant le gaz sec jusqu'à l'enceinte protectrice comprennent au moins une ligne d'alimentation en gaz, de préférence la ligne d'alimentation en gaz est équipée d'un dispositif de contrôle et/ou réglage de débit du gaz.

L'invention porte aussi sur un procédé pour éviter ou pour minimiser la contamination par des impuretés atmosphériques de l'intérieur de la première enceinte de protection agencée autour de l'outil mobile d'une installation de travail mettant en oeuvre au moins un jet de fluide à température cryogénique sous haute pression délivré par une ou plusieurs buses équipant un outil mobile, notamment une installation de travail selon l'invention, ladite extrémité inférieure de la première enceinte de protection étant positionnée en regard d'une surface à traiter, caractérisé en ce qu'on amène un gaz sec et on forme au moins une barrière gazeuse protectrice au moins au niveau de l'extrémité inférieure de la première enceinte de protection et sur au moins une partie de la périphérie de ladite première enceinte de protection et en ce qu'on forme la barrière gazeuse protectrice au moyen d'au moins une deuxième enceinte protectrice agencée autour d'au moins une partie de la première enceinte de protection et ouverte au niveau de l'extrémité inférieure de la première enceinte de protection, ladite deuxième enceinte protectrice étant alimentée en gaz sec a une pression supérieure à la pression régnant à l'intérieur de la première enceinte de protection et supérieure à la pression atmosphérique régnant à l'extérieur de la deuxième enceinte protectrice.

Selon le cas, le procédé de l'invention peut comprendre l'une ou plusieurs des caractéristiques suivantes :
- le gaz sec est de l'air ou de l'azote, de préférence de l'azote.
- le gaz sec est de l'azote provenant du dispositif d'échappement d'un échangeur thermique de l'installation et/ou du ciel gazeux de la source de fluide cryogénique.
- le fluide cryogénique distribué par la ou les buses de l'outil est à une pression d'au moins 300 bar, de préférence entre 2000 et 5000 bar, et à une température inférieure à -140°C, de préférence entre environ -140 et -180°C.
- les impuretés atmosphériques sont la vapeur d'eau.
- le débit du gaz sec alimentant l'intérieur de la deuxième enceinte protectrice est compris entre 1 000 et 20 000 1/min, de préférence entre 5 000 et 15 000 1/min.

Par ailleurs, l'invention concerne aussi un procédé de traitement de surface, de décapage ou d'écroutage, d'un matériau par fluide cryogénique à haute pression, dans lequel on met en oeuvre une installation ou un procédé selon l'invention.

L'invention va maintenant être décrite plus en détail en références aux Figures annexées parmi lesquelles :
- la Figure 1 schématise le fonctionnement d'une installation de travail mettant en oeuvre des jets cryogéniques sous très haute pression,
- les Figures 2a (vue de côté) et 2b (vue de dessous) schématisent l'outil porte-buses équipant l'installation de la Figure 1,
- la Figure 3 schématise un système d'aspiration classique équipant l'outil porte-buses équipant l'installation de la Figure 1, et
- la Figure 4 schématise un mode de réalisation d'un système d'aspiration selon la présente invention équipant l'outil porte-buses équipant l'installation de la Figure 1.

La Figue 1 schématise une installation classique de décapage, de traitement de surface ou analogue par jets de liquide cryogénique comportant habituellement un réservoir de stockage 1, telle une citerne, d'azote liquide (ci-après appelé LN₂) qui alimente, via une ligne d'amenée 6 d'azote liquide sous basse pression, c'est-à-dire à environ de 3 à 6 bar et à une température de -180°C environ, un dispositif de compression 2, avec compresseur et échangeur thermique amont interne permettant une mise à ultra haute pression (UHP) de l'azote liquide.

Le dispositif de compression 2 permet donc de réaliser la compression du LN₂ provenant du réservoir de stockage 1.

Le LN₂ à la première pression (UHP) est alors véhiculé via une ligne de convoyage (7), jusqu'à un échangeur thermique aval 3 externe où le LN2 UHP subit un refroidissement avec de l'azote liquide à pression atmosphérique (en 9), pour obtenir typiquement de l'azote liquide UHP.

Il en résulte du LN2 à une pression (UHP) typiquement supérieure à 300 bar, généralement comprise entre 2000 bar et 5000 bar, avantageusement comprise entre environ 3000 et 4000 bar, et à une température inférieure à -140°C, typiquement entre -140°C et - 180°C, par exemple de l'ordre d'environ -150 à -160°C, qui est envoyé (en 8) vers l'outil 4 de décapage ou analogue délivrant un ou plusieurs jets d'azote liquide UHP, en général plusieurs jets.

Le réservoir 1 de grande capacité, telle une citerne de camion ou un réservoir de stockage de plusieurs milliers de litres d'azote liquide, est généralement situé à l'extérieur des bâtiments, c'est-à-dire à l'air libre. Il peut être fixe ou mobile.

Le réservoir 1 de grande capacité est relié de manière classique à l'installation, c'est-à-dire au moyen de tuyauteries calorifugées comprenant une ou des vannes de contrôle... En outre, le convoyage du LN₂ entre les différents éléments du système se fait également via des canalisations calorifugées. Le débit global gazeux est approximativement de 20 1/min soit 15 m³/min.

En général, le dispositif de compression 2, l'échangeur externe 3 et surtout l'outil 4 sont en principe situés dans un ou des bâtiments.

Au cours du fonctionnement du procédé de traitement thermique ou analogue, il s'échappe continuellement de l'azote gazeux à pression atmosphérique (environ 1 bar) et à environ -196°C des deux échangeurs, à savoir de l'échangeur amont du dispositif de compression 2 et de l'échangeur aval 3.

Cet échappement d'azote gazeux se fait via un dispositif d'échappement, tel un évent ou analogue, agencé sur chacun desdits échangeurs thermiques 2, 3.

Dans les installations de l'art antérieur, cet azote relargué n'est pas réutilisé mais est généralement collecté et évacué hors des bâtiments pour éliminer les risques d'anoxie des personnels, c'est-à-dire qu'il constitue un gaz-déchet qui est évacué à l'atmosphère.

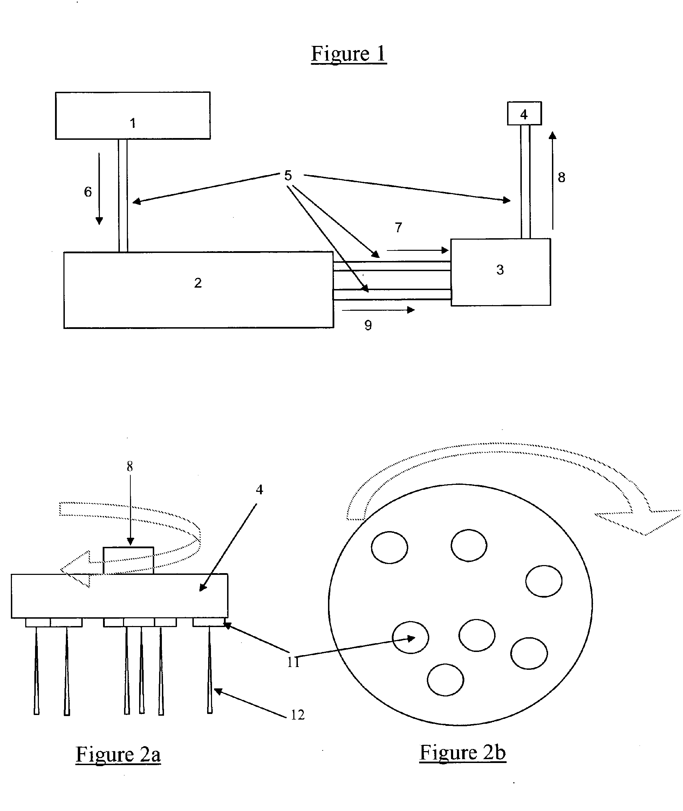

Par ailleurs, pour augmenter la taille de la surface traitée, c'est-à-dire décapée ou analogue, on utilise typiquement un outil 4 équipé de buses 11 du type de celles utilisées dans les procédés à jet d'eau UHP, mais alimentées ici par du LN₂ UHP (en 8) et que l'on met en rotation ou en oscillation de manière à obtenir des jets rotatifs ou oscillants 12 de LN₂ UHP qui sont utilisés pour décaper (ou de façon équivalente) la surface à traiter, comme illustré sur les Figures 2a (vue de côté) et Figure 2b (vue de dessous).

De façon connue en soi, l'outil 4 porte-buses est habituellement mis en rotation par un jeu de pignons, avec ou sans courroie de transmission, mu par un moteur électrique ou pneumatique par l'intermédiaire d'un premier arbre ou axe de transmission rotatif relié au moteur, d'une boite, d'un boitier ou d'une enceinte de transmission comprenant un mécanisme de transmission à jeu de pignons interne et d'un deuxième arbre ou axe de transmission ici rotatif relié quant à lui à l'outil 4 mobile muni des buses.

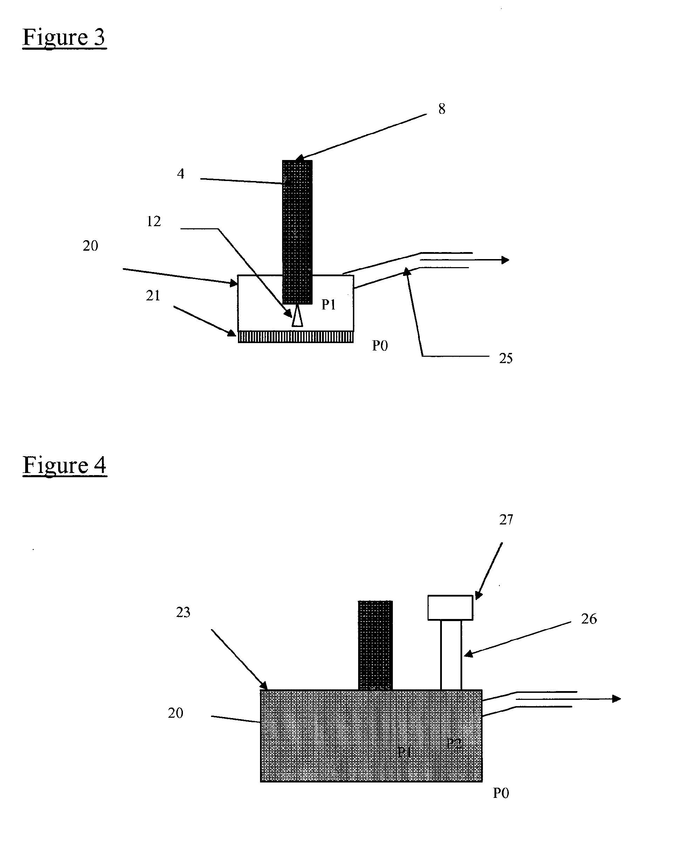

Comme illustré en Figure 3, afin de limiter les risques d'anoxie pour l'opérateur engendrés par de l'azote gazeux amené par la ligne d'amenée 8 et ensuite délivré par les buses 11 qui serait relâché et qui s'accumulerait dans le local où a lieu le traitement de surface, une première enceinte protectrice 20 formant une cloche d'aspiration est en général agencée autour de l'outil 4 porte-buses qui distribue les jets 12 d'azote liquide. La cloche 20 comporte une extrémité inférieure ouverte qui vient se positionner en regard de la surface à traiter et par laquelle sortent les jets 12 de liquide cryogénique sous pression distribués par les buses 11.

Cette cloche 20 est en général équipée, à son extrémité inférieure qui vient en contact avec ou est à proximité immédiate de la surface à décaper, d'une bavette ou jupe 21 flexible servant à assurer une fonction de barrière mécanique et d'étanchéité entre la cloche d'aspiration 20 et la surface à traiter. Cette bavette ou jupe 21 peut être dotée d'une (ou plusieurs) rangée de poils flexibles, d'une bande élastique (caoutchouc, cuir, élastomère...), d'un ou plusieurs boudins de mousse...

Un système d'aspiration 25 par dépression classique, comprenant une pompe aspirante, un ou plusieurs filtres ou d'autres dispositifs de purification ou de filtration, est en communication fluidique avec l'intérieur de la cloche 20 d'aspiration permet d'aspirer efficacement les résidus de surface et d'éviter par ailleurs le relargage d'azote dans la pièce où s'effectue le traitement de surface.

Dit autrement, la cloche d'aspiration 20 constitue une enceinte en dépression englobant l'outil 4, ce qui permet de récupérer et d'évacuer tout ou partie de l'azote délivré par les buses 11, ainsi que les poussières générées par le procédé de décapage ou analogue. La pression P1 régnant dans la cloche 20 est préférentiellement inférieure à la pression atmosphérique Po régnant hors de la cloche 20, c'est-à-dire dans la pièce où est installé l'outil 4.

Or, de l'air ambiant, de l'humidité et des poussières peuvent être aspirés et conduire progressivement à une mauvaise étanchéité de la cloche d'aspiration 20 et/ou à un colmatage des filtres ou autres dispositifs de purification ou de filtration équipant le système d'aspiration 25.

Pour y remédier, selon la présente invention, à l'installation de la Figure 3 a été incorporée un système de protection par rideau ou barrière de gaz comprenant une deuxième enceinte protectrice 23 venant recouvrir la cloche d'aspiration 21, de manière à former un double capotage ou une double-enveloppe autour de l'outil 4. Cette deuxième enceinte protectrice 23 peut avoir ou non une bavette ou une rangée de poils, comme la cloche d'aspiration 20.

Afin d'obtenir le rideau ou la barrière gazeux souhaité autour de la cloche 20, un flux de gaz sec et propre en surpression (P2) de la pression atmosphérique (Po) est introduite dans la deuxième enceinte protectrice 23 de manière à y créer une atmosphère en surpression gazeuse constituant la barrière gazeuse souhaitée.

La deuxième enceinte protectrice 23 fait donc office de barrière mécanique mais sert surtout à la création d'une barrière pneumatique isolante autour de la cloche 20 destinée empêcher l'entrée des impuretés atmosphérique, en particulier de la vapeur d'eau (humidité) au sein de la cloche 20, ce qui résout les problèmes susmentionnés.

En effet, comme la pression P1 de gaz sec dans la cloche d'aspiration 20 est inférieure à la pression P2 dans la deuxième enceinte protectrice 23, le gaz sec circulant de la deuxième enceinte protectrice 23 vers la cloche d'aspiration 20 est aspiré par le système d'aspiration 25 et dans le même temps, comme la pression P2 est supérieure à la pression atmosphérique P0 externe (i.e., 1 bar environ), il n'y a pas d'air humide dans le double capotage donc a fortiori pas non plus dans le système d'aspiration 25. De là, tout risque de formation de glace sur les poils de la bavette 21 de la cloche d'aspiration 20 et par ailleurs de colmatage par l'humidité des filtres du système d'aspiration 25 et de filtration est écarté.

La deuxième enceinte protectrice 23 peut venir recouvrir tout ou partie de la cloche d'aspiration 21. Préférentiellement, elle recouvre au moins la partie basse de la cloche 20, c'est-à-dire l'extrémité de la cloche 20 située en regard de la surface à traitée et portant la bavette ou jupe protectrice flexible en contact avec la surface à traiter, puisque c'est à ce niveau que peut principalement pénétrer l'air humide néfaste.

L'amenée du gaz sec dans l'enceinte protectrice 23 se fait classiquement par une ligne d'alimentation en gaz 26 par exemple, de préférence équipée d'un dispositif de contrôle et/ou réglage de débit 27 du gaz pouvant comprendre une vanne, un détendeur, un débitmètre ou d'autres dispositifs analogues.

Dans le cadre de la présente invention, on utilise préférentiellement une deuxième enceinte protectrice 23 (ou cloche) pour former le rideau gazeux protecteur autour de la cloche 20 mais il va de soi que tout autre système ou dispositif équivalent peut être utilisé dès lors qu'il permet d'obtenir une barrière gazeuse formée d'un gaz sec en suppression par rapport à la pression atmosphérique et à la pression régnant dans la cloche 20. Dans tous les cas, choisir les pressions P1 et P2 et agencer les éléments du système pour obtenir un rideau gazeux efficace est à la portée de l'homme du métier.

Il est à souligner qu'on pourrait aussi agencer une troisième enceinte, voire une quatrième enceinte ou plus, autour de la deuxième enceinte et y distribuer également du gaz sec de manière à créer plusieurs barrières gazeuses (i.e. rideaux gazeux) successives et à améliorer ainsi encore l'efficacité du procédé et du dispositif de l'invention.

Le gaz sec sous pression utilisé peut être de l'air sec débarrassé de toute humidité ou presque, ou alors un gaz neutre ou inerte sec, en particulier de l'azote sec, qui peut être un gaz-déchet du procédé ou alors un gaz conditionné en bouteilles de gaz ou en tout autre type de récipient ou réservoir de stockage de gaz, ou alors un gaz véhiculé par une canalisation de gaz ou un réseau de canalisations.

Dans le cadre de l'invention, on appelle « gaz sec », un gaz ou mélange gazeux contenant moins de 10 % en volume de vapeur d'eau, en particulier moins de 5% en volume de vapeur d'eau et préférentiellement dépourvu de vapeur d'eau.

Le gaz sec utilisé peut être comprimé par un compresseur dédié équipé ou non de filtres ou tout autre moyen de purification de gaz, d'une canalisation d'amenée de gaz ou d'un réseau de canalisations.

Toutefois, on préfère utiliser de l'azote sec formant le ciel gazeux de la citerne ou réservoir 1 mais plus préférentiellement de l'azote constituant un gaz-déchet ou gaz d'évent qui est habituellement évacué à l'atmosphère via les évents ou analogues équipant les échangeurs thermiques amont 2 ou aval 3 de l'installation de la Figure 1.

En effet, au cours du fonctionnement du procédé de traitement thermique, il s'échappe continuellement de l'azote gazeux à pression atmosphérique (environ 1 bar) et à -196°C environ de l'échangeur amont et de l'échangeur aval 3 du dispositif de compression 2, cet échappement d'azote gazeux se faisant via des dispositifs d'échappement, tel des évents ou analogues, agencés sur lesdits échangeurs thermiques 2, 3.

Récupérer ce gaz-déchet formé d'azote sec est particulièrement avantageux car il permet d'utiliser une source de gaz disponible et de la valoriser au lieu de le rejeter à l'atmosphère. Autrement dit, on opère un recyclage de l'azote évacué par le ou les évents des échangeurs thermiques de l'installation vers l'intérieur de la deuxième enceinte protectrice 23 de sorte d'y créer une surpression gazeux et obtenir la barrière pneumatique isolante souhaitée.

De préférence, le débit du gaz sec, notamment d'azote, est supérieur à la différence de débit entre le débit de l'aspiration par les moyens d'aspiration et le débit d'azote liquide puis gazeux éjecté pour le traitement de surface par les buses 11.

Afin de vérifier l'efficacité de la solution de la présente invention, une installation selon la Figure 1 a été mise en oeuvre de manière classique, comme illustré en Figure 3, et à titre comparatif, avec deuxième enceinte protectrice 23, comme illustré en Figure 4 selon l'invention.

Dans les deux cas, le débit d'azote gazeux, sortant liquide sous forme de jets 12 distribués par les buses 11 de l'outil 4, est de 300 m³/h, alors que le débit d'aspiration par le système d'aspiration 25 est de 1 000 m³/h. La pression P1 régnant dans la cloche d'aspiration est comprise entre 0.60 et 0.99 bar, de préférence entre 0.90 et 0.98 bar, avantageusement de l'ordre de 0.95 bar environ.

Sans double capotage et sans arrivée de gaz sec, c'est-à-dire avec le dispositif classique de la Figure 3, environ 700 m³/h d'air sont aspirés via la cloche d'aspiration 20, soit pour de l'air contenant 50% d'humidité, environ 350 m³/h d'humidité gazeuse, ce qui équivaut à environ 280 kg d'eau liquide par heure.

A titre comparatif, avec le dispositif selon l'invention illustré en Figure 4, le fait d'ajouter la deuxième enceinte protectrice 23 autour de la cloche d'aspiration 20 et d'y introduire 700 m³/h de gaz sec, à savoir de l'azote-déchet issu des évents des échangeurs thermiques amont et aval, régulé par un système de contrôle/réglage de débit permet de réduire la quantité de vapeur d'eau (humidité) à quasi zéro puisque l'air extérieur n'est plus aspiré du fait de la barrière pneumatique créée par le rideau d'azote distribué par l'enceinte protectrice 23. Ici, la pression P1 régnant dans la cloche d'aspiration est aussi de l'ordre de 0.95 bar, alors que la pression régnant dans la deuxième enceinte protectrice 23 est supérieure ou égale à la pression atmosphérique, typiquement de l'ordre de 1.05 bar environ.

La présente invention est applicable dans toute opération de traitement par jets de fluide cryogénique, en particulier de traitement de surface, de décapage ou d'écroutage, d'un matériau, tel les métaux, le béton, la pierre, les plastiques, le bois etc.

## Revendications

1. Installation de travail mettant en oeuvre au moins un jet de fluide à température cryogénique sous haute pression comprenant :
- une source (1) de fluide à température cryogénique relié fluidiquement à un outil mobile (4) comportant une ou plusieurs buses (11) de distribution de fluide pour distribuer un ou plusieurs jets dudit fluide à température cryogénique sous haute pression, et
- une première enceinte de protection (20) agencée autour de l'outil mobile (4) et raccordée fluidiquement à des moyens d'aspiration (25), ladite première enceinte de protection (20) comprenant une extrémité inférieure ouverte, située du côté de la ou des buses (11) de distribution de fluide, de manière à former une cloche d'aspiration autour de l'outil (4),
**caractérisée en ce qu'**elle comporte en outre des moyens d'étanchéité gazeuse (23) aptes à et conçus pour former au moins une barrière gazeuse protectrice au moins au niveau de l'extrémité inférieure de la première enceinte de protection (20) et sur au moins une partie de la périphérie de ladite première enceinte de protection (20), lesdits moyens d'étanchéité gazeuse (23) comprenant au moins :
- une deuxième enceinte protectrice (23) agencée autour d'au moins une partie de la première enceinte de protection (20) et ouverte au niveau de l'extrémité inférieure de la première enceinte de protection (20), et
- des moyens d'alimentation en gaz sec (26, 27) reliés fluidiquement à ladite deuxième enceinte protectrice (23) pour alimenter l'intérieur de ladite deuxième enceinte protectrice (23) ledit gaz sec.

2. Installation selon la revendication 1, **caractérisée en ce que** les moyens d'alimentation (28) en gaz sec comprennent une source d'azote sec.

3. Installation selon la revendication 1, **caractérisée en ce que** les moyens d'alimentation (28) en gaz sec comprennent une source d'air sec.

4. Installation selon l'une des revendications précédentes, **caractérisée en ce qu'**elle comporte au moins un échangeur thermique (2 ; 3) comprenant un dispositif d'échappement, en particulier un évent, agencé entre la source (1) de fluide à température cryogénique et l'outil rotatif (4), les moyens d'alimentation (26, 27) en gaz sec étant relié fluidiquement audit dispositif d'échappement de manière à pouvoir récupérer au moins une partie du gaz s'échappant par ledit dispositif d'échappement et l'introduire subséquemment dans ladite deuxième enceinte protectrice (23).

5. Installation selon l'une des revendications précédentes, **caractérisée en ce que** la source (1) de fluide à température cryogénique est un réservoir contenant un liquide cryogénique surmonté d'un ciel gazeux, les moyens d'alimentation en gaz sec étant relié fluidiquement au ciel gazeux de la source (1) de fluide à température cryogénique.

6. Installation selon l'une des revendications précédentes, **caractérisée en ce que** les moyens d'alimentation en gaz sec convoyant le gaz sec jusqu'à l'enceinte protectrice (23) comprennent au moins une ligne d'alimentation en gaz (26), de préférence la ligne d'alimentation en gaz (26) est équipée d'un dispositif de contrôle et/ou réglage de débit (27) du gaz.

7. Procédé pour éviter ou pour minimiser la contamination par des impuretés atmosphériques de l'intérieur de la première enceinte de protection (20) agencée autour de l'outil mobile (4) d'une installation de travail mettant en oeuvre au moins un jet de fluide à température cryogénique sous haute pression délivré par une ou plusieurs buses (11) équipant un outil mobile (4), notamment une installation de travail selon l'une des revendications 1 à 6, ladite extrémité inférieure de la première enceinte de protection (20) étant positionnée en regard d'une surface à traiter, **caractérisé en ce qu'**on amène un gaz sec et on forme au moins une barrière gazeuse protectrice au moins au niveau de l'extrémité inférieure de la première enceinte de protection (20) et sur au moins une partie de la périphérie de ladite première enceinte de protection (20), la barrière gazeuse protectrice étant formée au moyen d'au moins une deuxième enceinte protectrice (23) agencée autour d'au moins une partie de la première enceinte de protection (20) et ouverte au niveau de l'extrémité inférieure de la première enceinte de protection (20), ladite deuxième enceinte protectrice (23) étant alimentée en gaz sec a une pression (P2) supérieure à la pression régnant à l'intérieur de la première enceinte de protection (20) et supérieure à la pression atmosphérique régnant à l'extérieur de la deuxième enceinte protectrice (23).

8. Procédé selon la revendication 7, **caractérisé en ce que** le gaz sec est de l'air ou de l'azote.

9. Procédé selon l'une des revendications 7 ou 8, **caractérisé en ce que** le gaz sec est de l'azote provenant du dispositif d'échappement d'un échangeur thermique de l'installation et/ou du ciel gazeux de la source (1) de fluide cryogénique.

10. Procédé selon l'une des revendications 7 à 9, **caractérisé en ce que** le fluide cryogénique distribué par la ou les buses de l'outil (4) est à une pression d'au moins 300 bar, de préférence entre 2000 et 5000 bar, et à une température inférieure à -140°C, de préférence entre environ -140 et -180°C.

11. Procédé selon l'une des revendications 7 à 10, **caractérisé en ce que** les impuretés atmosphériques sont la vapeur d'eau.

12. Procédé selon l'une des revendications 7 à 11, **caractérisé en ce que** le débit du gaz sec alimentant l'intérieur de la deuxième enceinte protectrice (23) est compris entre 1 000 et 20 0001/min, de préférence entre 5 000 et 15 0001/min.

13. Procédé de traitement de surface, de décapage ou d'écroutage, d'un matériau par fluide cryogénique à haute pression, dans lequel on met en oeuvre une installation selon l'une des revendications 1 à 6 ou un procédé selon l'une des revendications 7 à 12.

## Patentansprüche

1. Arbeitsausrüstung, bei der mindestens ein Strahl eines Hochdruckfluids kryogener Temperatur verwendet wird, umfassend:
- eine Quelle (1) für Fluid kryogener Temperatur, die fluidmäßig mit einem beweglichen Werkzeug (4) verbunden ist, das eine oder mehrere Fluidverteilungsdüse(n) (11) zum Verteilen von einem Strahl oder mehreren Strahlen des Hochdruckfluids kryogener Temperatur aufweist, und
- eine erste Schutzumhüllung (20), die um das bewegliche Werkzeug (4) herum angeordnet ist und fluidmäßig an Saugmittel (25) angeschlossen ist, wobei die erste Schutzumhüllung (20) ein offenes unteres Ende umfasst, das an der Seite der Fluidverteilungsdüse(n) (11) befindlich ist, um eine Saugglocke um das Werkzeug (4) herum zu formen,
**dadurch gekennzeichnet, dass** sie ferner gasdichte Mittel (23) aufweist, die dazu geeignet und dafür ausgelegt sind, mindestens eine schützende Gassperre zumindest am unteren Ende der ersten Schutzumhüllung (20) und an zumindest einem Teil des Rands der ersten Schutzumhüllung (20) zu bilden, wobei die gasdichten Mittel (23) mindestens Folgendes umfassen:
- eine zweite Schutzumhüllung (23), die um zumindest einen Teil der ersten Schutzumhüllung (20) angeordnet und am unteren Ende der ersten Schutzumhüllung (20) offen ist, und
- Mittel zur Versorgung mit Trockengas (26, 27), die fluidmäßig mit der zweiten Schutzumhüllung (23) verbunden sind, um dem Inneren der zweiten Schutzumhüllung (23) das Trockengas zuzuführen.

2. Ausrüstung nach Anspruch 1, **dadurch gekennzeichnet, dass** die Mittel zur Versorgung (28) mit Trockengas eine Trockenstickstoffquelle umfassen.

3. Ausrüstung nach Anspruch 1, **dadurch gekennzeichnet, dass** die Mittel zur Versorgung (28) mit Trockengas eine Trockenluftquelle umfassen.

4. Ausrüstung nach einem der vorhergehenden Ansprüche, **dadurch gekennzeichnet, dass** sie mindestens einen eine Ausströmvorrichtung, insbesondere eine Austrittsöffnung, umfassenden Wärmetauscher (2; 3) aufweist, der zwischen der Quelle (1) für Fluid kryogener Temperatur und dem sich drehenden Werkzeug (4) angeordnet ist, wobei die Mittel zur Versorgung (26, 27) mit Trockengas fluidmäßig mit der Ausströmvorrichtung verbunden sind, damit zumindest ein Teil des Gases, der aus der Ausströmvorrichtung strömt, verwertet wird und anschließend in die zweite Schutzumhüllung (23) eingeleitet werden kann.

5. Ausrüstung nach einem der vorhergehenden Ansprüche, **dadurch gekennzeichnet, dass** es sich bei der Quelle (1) für Fluid kryogener Temperatur um einen Behälter handelt, der eine kryogene Flüssigkeit enthält, über der sich ein Gasraum befindet, wobei die Mittel zur Versorgung mit Trockengas fluidmäßig mit dem Gasraum der Quelle (1) für Fluid kryogener Temperatur verbunden sind.

6. Ausrüstung nach einem der vorhergehenden Ansprüche, **dadurch gekennzeichnet, dass** die Mittel zur Versorgung mit Trockengas, die das Trockengas bis zur Schutzumhüllung (23) befördern, mindestens eine Gasversorgungsleitung (26) umfassen, die Gasversorgungsleitung (26) vorzugsweise mit einer Gasdurchsatzsteuer- und/oder Gasdurchsatzregelvorrichtung (27) versehen ist.

7. Verfahren zum Verhindern oder zum Minimieren der Verunreinigung des Inneren der ersten Schutzumhüllung (20) mit Luftverunreinigungen, die um das bewegliche Werkzeug (4) einer Arbeitsausrüstung herum angeordnet ist, bei der mindestens ein Strahl eines Hochdruckfluids kryogener Temperatur verwendet wird, das von einer oder mehreren Düsen (11) abgegeben wird, mit der bzw. denen ein bewegliches Werkzeug (4) ausgestattet ist, insbesondere eine Arbeitsausrüstung nach einem der Ansprüche 1 bis 6, wobei das untere Ende der ersten Schutzumhüllung (20) gegenüber einer zu behandelnden Fläche platziert wird, **dadurch gekennzeichnet, dass** ein Trockengas zugeführt wird und mindestens eine schützende Gassperre zumindest am unteren Ende der ersten Schutzumhüllung (20) und an zumindest einem Teil des Rands der ersten Schutzumhüllung (20) gebildet wird, wobei die schützende Gassperre mittels mindestens einer zweiten Schutzumhüllung (23) gebildet wird, die um mindestens einen Teil der ersten Schutzumhüllung (20) angeordnet wird und am unteren Ende der ersten Schutzumhüllung (20) offen ist, wobei der zweiten Schutzumhüllung (23) Trockengas mit einem Druck (P2) höher als der im Inneren der ersten Schutzumhüllung (20) herrschende Druck und höher als der außerhalb der zweiten Schutzumhüllung (23) herrschende Luftdruck zugeführt wird.

8. Verfahren nach Anspruch 7, **dadurch gekennzeichnet, dass** es sich bei dem Trockengas um Luft oder Stickstoff handelt.

9. Verfahren nach einem der Ansprüche 7 oder 8, **dadurch gekennzeichnet, dass** es sich bei dem Trockengas um Stickstoff handelt, der aus der Ausströmvorrichtung eines Wärmetauschers der Ausrüstung und/oder aus dem Gasraum der Quelle (1) für kryogenes Fluid stammt.

10. Verfahren nach einem der Ansprüche 7 bis 9, **dadurch gekennzeichnet, dass** das von der oder den Düse(n) des Werkzeugs (4) verteilte kryogene Fluid einen Druck von mindestens 300 Bar, vorzugsweise zwischen 2 000 und 5 000 Bar und eine Temperatur von unter -140 °C, vorzugsweise zwischen ungefähr -140 und -180°C aufweist.

11. Verfahren nach einem der Ansprüche 7 bis 10, **dadurch gekennzeichnet, dass** es sich bei den Luftverunreinigungen um Wasserdampf handelt.

12. Verfahren nach einem der Ansprüche 7 bis 11, **dadurch gekennzeichnet, dass** der Durchsatz des Trockengases, das dem Inneren der zweiten Schutzumhüllung (23) zugeführt wird, zwischen 1 000 und 20 000 l/min, vorzugsweise zwischen 5 000 und 15 000 l/min liegt.

13. Verfahren zur Oberflächenbehandlung, zum Entfernen oder Abtragen von Schichten, eines Werkstoffs mit einem kryogenen Hochdruckfluid, bei dem eine Ausrüstung nach einem der Ansprüche 1 bis 6 oder ein Verfahren nach einem der Ansprüche 7 bis 12 verwendet wird.

## Claims

1. Working installation using at least one jet of fluid at cryogenic temperature under high pressure comprising:
- a source (1) of fluid at cryogenic temperature in fluid communication with a movable tool (4) having one or more fluid dispensing nozzles (11) for dispensing one or more jets of said fluid at cryogenic temperature under high pressure, and
- a first protective enclosure (20) fitted around the movable tool (4) and in fluid communication with suction means (25), said first protective enclosure (20) comprising an open lower end, situated at the side of the fluid dispensing nozzle or nozzles (11), so as to form a suction hood around the tool (4),
**characterised in that** it further contains gaseous sealing means (23) able and designed to form at least one gaseous protection barrier at least at the lower end of the first protective enclosure (20) and over at least a part of the periphery of said first protective enclosure (20), said gaseous sealing means (23) comprising at least:
- a second protective enclosure (23) fitted around at least a part of the first protective enclosure (20) and open at the lower end of the first protective enclosure (20), and
- dry gas supply means (26, 27), in fluid communication with said second protective enclosure (23), to supply the interior of said second protective enclosure (23) with said dry gas.

2. Installation according to claim 1, **characterised in that** the dry gas supply means (28) comprise a source of dry nitrogen.

3. Installation according to claim 1, **characterised in that** the dry gas supply means (28) comprise a source of dry air.

4. Installation according to any of the preceding claims, **characterised in that** it contains at least one heat exchanger (2; 3) comprising an exhaust device, in particular a vent, fitted between the source (1) of fluid at cryogenic temperature and the rotary tool (4), the dry gas supply means (26, 27) being in fluid communication with said exhaust device so as to be able to recover at least some of the gas escaping via said exhaust device and subsequently introduce it into said second protective enclosure (23).

5. Installation according to any of the preceding claims, **characterised in that** the source (1) of fluid at cryogenic temperature is a tank containing a cryogenic liquid below a gas headspace, the dry gas supply means being in fluid communication with the gas headspace of the source (1) of fluid at cryogenic temperature.

6. Installation according to any of the preceding claims, **characterised in that** the dry gas supply means conveying the dry gas to the protective enclosure (23) comprise at least one gas supply line (26), the gas supply line (26) is preferably equipped with a device for controlling and/or regulating gas flow (27).

7. Method for avoiding or minimising contamination by atmospheric impurities of the interior of a first protective enclosure (20) fitted around the movable tool (4) of a working installation using at least one jet of fluid at cryogenic temperature under high pressure dispensed by one or more nozzles (11) fitted to a movable tool (4), in particular a working installation according to any of claims 1 to 6, said lower end of the first protective enclosure (20) being positioned facing a surface to be treated, **characterised in that** a dry gas is supplied and at least one gaseous protection barrier is formed at least at the lower end of the first protective enclosure (20) and over at least a part of the periphery of said first protective enclosure (20), the gaseous protection barrier being formed by means of at least a second protective enclosure (23) fitted around at least a part of the first protective enclosure (20) and open at the lower end of the first protective enclosure (20), said second protective enclosure (23) being supplied with dry gas at a pressure (P2) higher than the pressure prevailing within the first protective enclosure (20) and higher than the atmospheric pressure prevailing outside the second protective enclosure (23).

8. Method according to claim 7, **characterised in that** the dry gas is air or nitrogen.

9. Method according to either claim 7 or claim 8, **characterised in that** the dry gas is nitrogen from the exhaust device of a heat exchanger of the installation and/or from the gas headspace of the source (1) of cryogenic fluid.

10. Method according to any of claims 7 to 9, **characterised in that** the cryogenic fluid dispensed by the nozzle or nozzles of the tool (4) is at a pressure of at least 300 bar, preferably between 2,000 and 5,000 bar, and at a temperature lower than -140 °e, preferably between about -140 and -180 °C.

11. Method according to any of claims 7 to 10, **characterised in that** the atmospheric impurities are water vapour.

12. Method according to any of claims 7 to 11, **characterised in that** the flow rate of the dry gas supplying the interior of the second protective enclosure (23) is between 1,000 and 20,000 l/min, preferably between 5,000 and 15,000 l/min.

13. Method of surface treatment, blasting or peeling of a material by cryogenic fluid at high pressure, wherein an installation according to any of claims 1 to 6 or a method according to any of claims 7 to 12 is used.
